# EUROPEAN PATENT SPECIFICATION

(11) **EP 1 477 317 B1**
(45) Date of publication and mention of the grant of the patent: **14.12.2011**
(21) Application number: 04102002.5
(22) Date of filing: 07.05.2004
(51) Int. Cl.: B41J 3/407

(54) **Printing Apparatus**
Drucker
Imprimante

(30) Priority: 09.05.2003 KR 2003029403
(43) Date of publication of application: 17.11.2004
(73) Proprietor: SAMSUNG ELECTRONICS CO., LTD., Suwon-si, Gyeonggi-do 442-742 (KR)
(72) Inventor: Chang, Deuk-hwan, Yeongtong-gu, Suwon-si Gyeonggi-do (KR)
(74) Representative: Walaski, Jan Filip

(56) References cited:
- EP-A- 1 190 857
- WO-A-00/32399
- WO-A-99/52713
- US-A1- 2004 052 564
- US-B1- 6 264 295

## Description

The present invention relates to a printing apparatus comprising sheet feeding means and a reciprocally driven print head for printing on sheets fed by the sheet feeding means.

Compact discs and digital versatile discs have been widely adopted domestically and commercially for storing data. However, generally users have had to label these discs by writing directly onto the disc or attaching an adhesive label. The result tends not to be aesthetically pleasing and is easily damaged.

WO99/52713 and EP 1190857 both disclose an apparatus in which a surface of a disc can be printed by a conventional printer using a tray to hold the disc as it is fed through the printer.

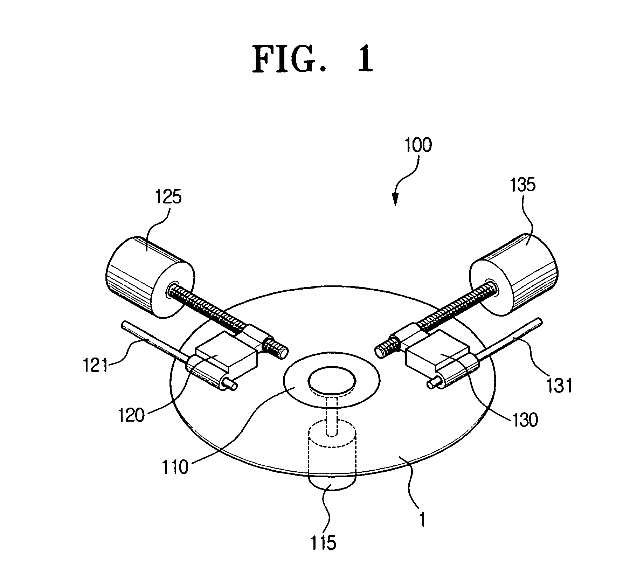

As shown in Figure 1, JP-A-9-265760 discloses an apparatus that can print contents or patterns designed by a user on surfaces of discs. As can be seen from Figure 1, the conventional disc-printing unit 100 comprises a turntable 110, on which a disc 1 is seated, a rotary motor 115 for rotating the turntable 110 and a printing head 120 located above the turntable 110. The printing head 120 is moved by a motor 125 and a lead screw and guided in the radial direction of the turntable 110 by a guide rod 121. The disc-printing unit 100 further comprises an optical head 130 for directing a laser beam onto the disc 1 in order to reproduce the information recorded on the disc 1, an optical head driving motor 135 and an optical head guide rod 131.

With this conventional construction, if a signal corresponding to a print signal is applied from outside, a control section converts the print signal into a dot image of a polar coordinate format about the rotational axis of the turntable 110. Then, the motor 125 is controlled by the control section on the basis of the dot image data, such that the printing head prints the contents or designs on the surface of the disc 1 while being moved radially. At the same time, the disc 1 is rotated by the disc rotating motor 115 and the ink droplets ejected from the print head 120 according to dot image data.

However, the conventional disc-printing unit 100 is complicated to construct. In particular, the optical head 130 for reading and writing information of a disc 1 and its driving means 131, 135 and a printing head 120 for performing printing on the disc 1 and its driving means 121, 125 need to be installed together within a given space. In addition, a position-detecting sensor must be provided for detecting the position of the printing head 120 in a polar coordinate system within the range of movement of the printing head 120, and a disc rotating motor 115 must also be provided. Furthermore, the print head moving motor 125, the disc rotating motor 115, and the driving motor 135 must be separately provided. Such a complicated construction make manufacturing expensive.

A printing apparatus, according to the present invention is characterised in that the disc-printing station comprises a turntable for rotating a disc to be printed on by the print head, a motor for driving both sheet feeding means and the turntable, and a transmission for transmitting drive to the turntable. Thus, a printing apparatus having a disc-printing station, which enables a user to print a desired design onto a disc, is provided. Furthermore, a printing apparatus having a disc-printing station, which has a simple construction making it inexpensive to manufacture and maintain, is provided.

Preferably, the printing apparatus comprises a clutch for selectively transmitting drive to the turntable.

Preferably, the disc-printing station is located within the range of the reciprocal motion of the print head used for printing on sheets fed by the sheet feeding means.

Preferably, the print head is an inkjet print head.

Embodiments of the present invention will now be described, by way of example, with reference to Figures 2 to 7 of the accompanying drawings, in which:
Figure 1 is a perspective view of a known disc-printing unit;
Figure 2 is a partial perspective view of a printer provided with a disc-printing unit according to the present invention;
Figure 3 is an enlarged view of the main part of Figure 2, in which the construction of the disc-printing unit is depicted in more detail;
Figure 4 is a control block diagram of a carrier, in which an encoding unit for controlling the printing position of ink cartridge is indicated, according to the present invention;
Figure 5 is a perspective view of the bottom of components shown in Figure 3;
Figure 6 is a bottom view of Figure 3; and
Figure 7 is a bottom view of a disc-printing unit according to the present invention.

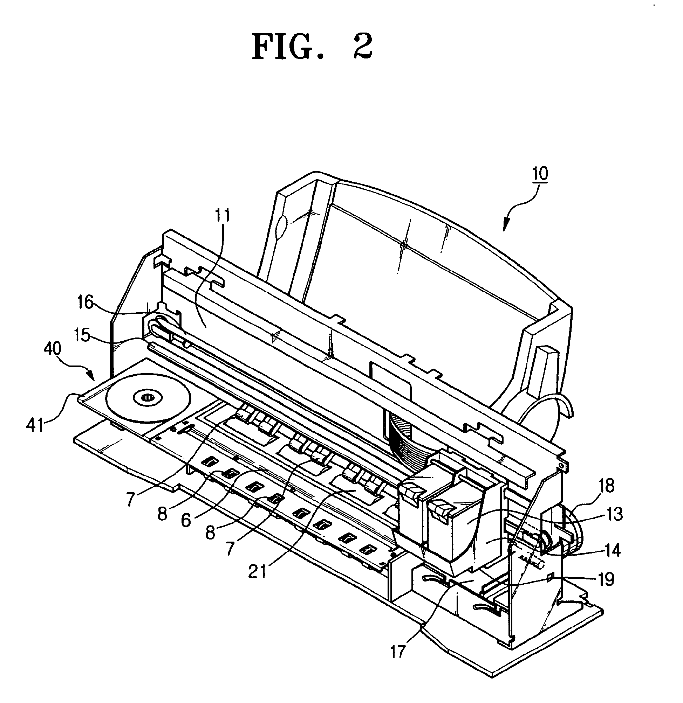

Referring to Figure 2, a printer 10 is provided with a disc-printing unit 40.

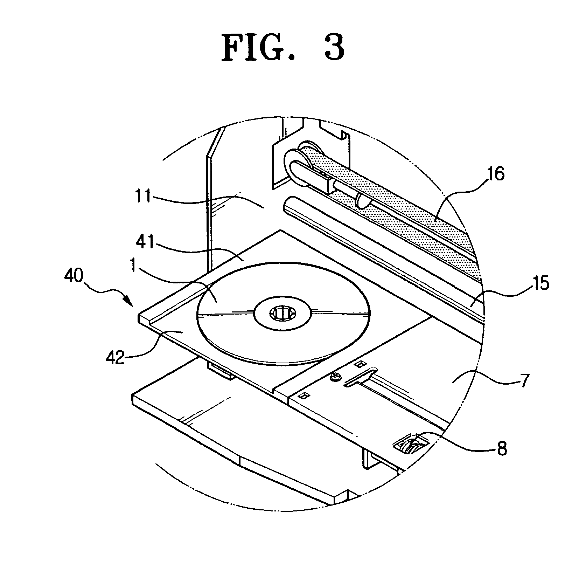

As can be seen from Figures 2 and 3, an image forming apparatus, i.e. the printer 10, includes a carrier 14, at least one sheet feeding roller 21 for feeding sheets, installed in a central area below the carrier 14, a driving motor 25 for rotating the sheet feeding roller 21 and a disc-printing unit 40 driven from the sheet feeding roller 21. The disc-printing unit 40 is positioned below the carrier 14 and opposite a maintenance station 17, with the sheet feeding roller positioned between the disc-printing unit 40 and the maintenance station 17.

As in a conventional ink-jet printer, the carrier 14 has a print head 19 positioned at its bottom and an ink cartridge 13 removably mounted in the carrier 14. The carrier 14 is moved a toothed belt 16 installed parallel to a guide rod 15 that guides the carrier. The guide rod 15 extends from a position above the disk-printing unit 40 to a position above the maintenance station 17. The toothed belt 16 reciprocates the carrier 14 between a position above the disc-printing unit 40 and a position above the maintenance station 17 and is driven by a carrier motor (not shown). The print head 19 may be attached to or integrally formed with the lower end of the ink cartridge 13 so that, when the ink cartridge 13 is mounted in the carrier 14, the print head 19 is exposed through the lower end of the carrier 14. However, this is not limiting. The print head 19 could be integrally formed with the carrier 14 and the ink cartridge 13 removably mounted to the carrier 14.

The sheet feeding roller 21 is spaced from the ink cartridge 13, loaded in the carrier 14, with a sheet-feeding space between the sheet feeding roller 21 and the ink cartridge 13. A sheet guide plate 6 is placed within the sheet-feeding space to guide the feeding of a sheets to be printed on. The sheet guide plate 6 comprises at least one roller opening to partially expose the feeding roller 21, and at least one pinch roller 7 is provided above the roller openings. The sheet guide plate 6 contains at least one roller hole to expose partially at least one paper-discharging roller 8.

A paper cassette (not shown) is located underneath the feeding roller 21. The sheets in the paper cassette are picked up by the pickup rollers (not shown) and fed individually to the sheet feeding roller 21. The pickup rollers are driven by the driving motor 25 rotating the feeding roller 21. In addition, sheets fed by the sheet feeding roller 21 are printed with ink ejected from the print head 19, which moves in unison with the carrier 14.

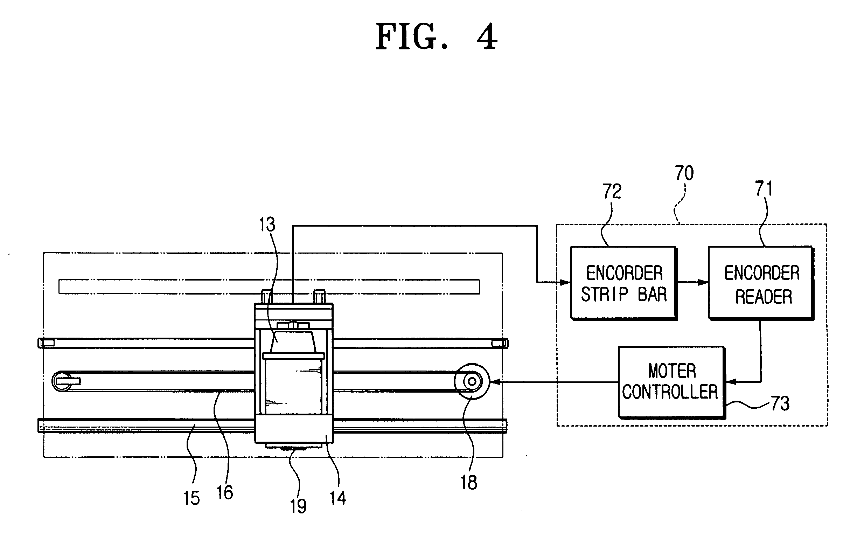

The position of the ink cartridge 13 is determined by an encoding unit 70 and a motor controller 73 that controls the operation of the carrier motor 18 on the basis of the signal from the encoding unit 70, as shown in Figure 4. The encoding unit 70 may consist of an encoder reader 71 formed on a perimeter surface of the carrier 14, and an encoder strip bar 72 provided along the moving direction of the carrier 14. The encoder strip bar 72 is recorded with information relating to the position and moving distance of the carrier 14.

The encoder reader 71 reads and transmits current information of the carrier 14, recorded in the encoder strip bar 72, to the motor controller 73. The motor controller 73 then calculates, or determines, the position, moving velocity or the like of the carrier 14 on the basis of the signal received from the encoder reader 71. Thereafter, the motor controller 73 controls the position, moving velocity, and moving direction of the carrier 14 through the carrier motor 18.

The operational control of the carrier 14 on the basis of the encoding unit 70 may be applied to the ink cartridge loaded in the carrier 14. Because the ink cartridge 13 is loaded in the carrier 14 and the position thereof is fixed in relation to the carrier 14, its position can be easily determined in relation to the position of the carrier 14. Therefore, because the position control of the ink cartridge 13 can be achieved in the same manner as controlling the operation of the carrier 14, a separate position-detecting sensor is not necessary.

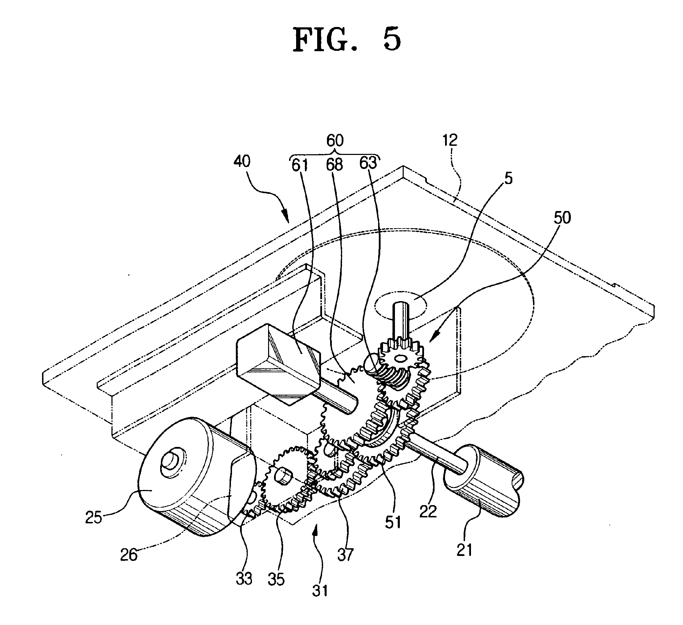

The driving motor 25 for driving the sheet feeding roller 21 is attached to a bracket 26, fixed on the rear side of the feeding roller 21, as shown in Figure 5. The bracket 26 can be fixed on the bottom side of the printer body 11 by using separate fixing members. It is preferable that the driving motor 25 attached to the bracket 26 consists of a line feed (LF) motor. In addition, a gear train 31 intermediates between the driving motor 25 and the feeding roller 21 to convert the driving force of the driving motor 25 into the rotational force of the feeding roller 21. The driving motor 25 may provide a rotational driving force to the other rollers, such as the sheet-discharging rollers driven to transfer the paper, in addition to the feeding roller 21. Since such a driving force transfer is well known to those skilled in the art, a detailed description is omitted.

The gear train 31 comprises a fixed gear 33 connected to the driving shaft of the driving motor 25, a driving gear 51 connected to the rotational shaft 22 of the feeding roller 21 and first and second idler gears 35 and 37 engaged between the driving motor 25 and the driving gear 51. The idler gears 35 and 37 are rotatably connected to the bracket 26 of the driving motor 26 and a flange extended from the bracket, respectively. With this construction, the driving force of the driving motor 25 is properly decelerated and transmitted to the feeding roller 21.

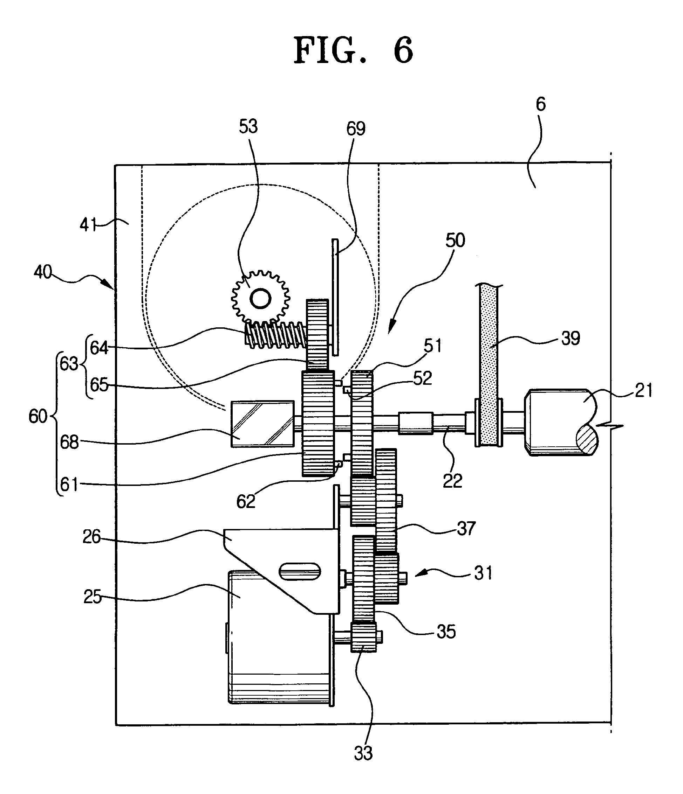

The gear train 31 further comprises a toothed belt 39, as shown in Figure 6, and additional gears for intermittent operation of pickup rollers. The pickup rollers are for supplying sheets, loaded in the paper cassette, to the sheet feeding roller 21 one by one. The pickup rollers are driven by the driving motor 25. Since the construction of the gear train 31 for driving the feeding roller and pickup rollers are well known to those skilled in the art, a detailed description is omitted.

The maintenance station 17 is a device for protecting and cleaning the print head 19, wherein the print head 19 is loaded in and carried by the carrier 14. When the operation of the printer is interrupted or stopped, the carrier 14 stands by at the position above the maintenance station 17, in which event the maintenance station 17 wipes and caps the print head 19 of the ink cartridge 13, thereby preventing the solidification and adherence of remaining ink or foreign matters. Since the technique related to such a maintenance station 17 is well known to those skilled in the art, a detailed description is omitted.

Referring to Figures 5 and 6, the disc-printing unit 40 comprises a rotary platform 5, such as a turntable, on which a disc can be set and a power transfer unit 50 for transferring the drive from the sheet feeding roller 21 to the rotary platform 5.

The rotary platform 5 is horizontally located below the carrier 14 and is capable of rotating about its vertical axis. Between the rotary platform 5 and the ink cartridge 13, loaded in the carrier 14, there is a disc-receiving space that corresponds to the sheet-feeding space provided between the sheet feeding roller 21 and the ink cartridge 13. The disc 1 is introduced into the disc-receiving space and set on the top of the rotary platform 5. As such, printing is performed on the surface of the disc with ink released from the print head 19 loaded in the carrier 14.

Preferably, a base 41 is provided within the disc-receiving space to support the rotary platform 5. More preferably, a guide groove 42 for guiding the insertion and removal of the disc 1 is formed on the base 41 in which the guide groove 42 is recessed from the surface of the base 41. Such a base 41 may be simply integrated with the sheet guide plate 6.

The power transfer unit 50 includes a driving gear 51 connected to the rotational shaft 22 of the feeding roller 21, a driven gear 53, downwardly connected to the vertical rotation shaft of the rotary platform 5, and a clutch unit 60, intermittently transmitting the drive from the driving gear 51 to the driven gear 53. The driven gear 53 may simply be a worm wheel. The driving gear 51 is connected to be rotatable integrally with the rotational shaft 22 of the feeding roller 21 and the driving gear 51 is provided with a plurality of projections 52, projecting in the direction opposite to the feeding roller 21.

The clutch unit 60 comprises a clutch gear 61 connected to the rotational shaft 22 opposite to the driving gear 51, a solenoid device 68 for moving the clutch gear 61 between an engagement position, where the clutch gear 61 is engaged with the driving gear 51, and a disengagement position, where the clutch gear 61 is released from the engagement with the driving gear 51, and an intermediate gear 63, one end of which is engaged with the clutch gear 61 and the other end of which is engaged with the driven gear 53 of the rotary platform 5. The clutch gear 61 is provided with a plurality of second projections 62 which engage with a first projections 52 of the driving gear 51.

The intermediate gear 63 is rotatably attached to a fixed rib 69 installed on the bottom surface of the base 41 and downwardly projected from the bottom surface. The intermediate gear 63 is divided into a worm part 64 that is parallel to the rotational shaft 22 of the feeding roller 21, and a gear part 65 outwardly extended in the radial direction from one end of the worm part 64. The worm part 64 is engaged with the driven gear 53, i.e., a worm wheel of the revolvable platform 5, and the gear part 65 is engaged with the clutch gear 61. With this construction, if the clutch gear 61 and the driving gear 51 are engaged with each other, the driving force of the driving gear 51 is transmitted to the driven gear 53 through the clutch gear 61 and the intermediate gear 63.

Meanwhile, the solenoid device 68 is attached to the bottom surface of the base 41, between the driven gear 53 and the driving motor 25. An actuating rod of the solenoid device 68 moves the clutch gear 61 between the engagement position and disengagement position with respect to the driving gear 51. The operation of the solenoid device 68 is controlled by a control section, which is not shown in the drawings.

In order to perform printing using the disc-printing unit 40, a disc 1 is set in the disc-receiving space, oriented so that the surface to be printed is faced toward the printing head of the ink cartridge 13. If a signal related to a print image is applied, the control section positions the carrier 14 above the disc-printing unit 40. At this time, the position of the carrier 14 is detected through the encoder strip bar 72 and the encoder reader 71 of the encoding unit 70.

If the position of the carrier 14 is established, the control section operates the solenoid device 68 and causes the clutch gear 61 to be engaged with the driving gear 51. When the driving gear 25 is driven, the driving force transmitted through the gear train 31 rotates the feeding roller 21. Concurrently, the rotational force of the feeding roller 21 is transmitted to the driven gear 54, i.e., the worm wheel through the driving gear 51, the clutch gear 61, and the intermediate gear 63, and thus the rotary platform 5 rotates about its vertical axis. At this time, the disc 1 set on top of the rotary platform 5 is rotates in unison with the rotary platform 5.

Then, the control section causes ink to be ejected through the print head 15 of the ink cartridge 13 loaded in the carrier 14, so that the surface of the disc is printed with a print image. The position of the ink cartridge 13 for printing is capable of being detected by the encoding unit 70 that detected the position of the carrier 14. Therefore, the motor controller 73 controls the operation of the carrier motor 18.

Following this, once the position of the ink cartridge 13 is detected, the control section causes the ink ejected from the print head 19 to be properly intermitted while rotating the disc 1. The print image is printed on the surface of the disc 1 circumferentially.

The printing of the print image can be performed while moving the ink cartridge 13 concurrently with rotating the disc 1. Because the encoding unit 70 can detect the displacement of the ink cartridge 13, it is possible to control the position of the ink cartridge 13 through the encoding unit 70 and the motor controller 73. Such a printing method is advantageous in that the printing can be rapidly performed along the circumferential and radial directions of the surface of the disc 1.

Although a disc-printing unit 40 is illustrated in the embodiments described above, as having a clutch unit 60 capable of controlling the rotational force of feeding roller 21, the clutch unit may be omitted.

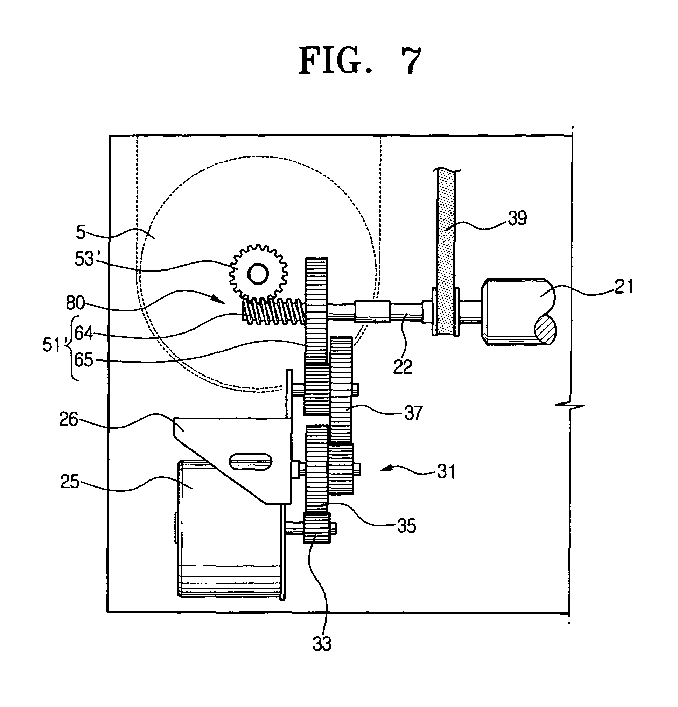

Figure 7 shows a disc-printing unit 80 according to another embodiment of the present, in which the clutch unit is omitted. The disc-printing unit 80 is constructed in such a manner that a driving gear 51' mounted on the rotational shaft 22 of the feeding roller 21 is substituted with the intermediate gear of the aforementioned embodiment.

That is, the driving gear 51' according to the present embodiment consists of a worm part 64 and a gear part 65. Here, the gear part 65 is connected to the second idle gear 37 that transmits the driving force of the driving motor 25. In addition, the worm part 64 is engaged with a worm wheel which is a driven gear 53' connected to the rotary axis of the revolvable platform 5. With this construction, if the feeding roller 21 rotates, the rotational force is transmitted to the revolvable platform 5 through the driving gear 51' and the driven gear 53'.

In the disc-printing unit 80 with this construction, the revolvable platform 5 always rotates when the feeding roller 21 rotates. However, because the construction is simplified as compared to the aforementioned embodiment, the manufacturing cost is reduced.

As described above, the image forming apparatus according to the present invention functions beyond printing on a print paper. It is also capable of printing desired contents or designs on a surface of a disc on.

Because the disc-printing unit is simple in construction and can be incorporated in the image forming apparatus, manufacturing costs and maintenance costs are reduced.

## Claims

1. A printing apparatus (10) comprising sheet feeding means (21), a reciprocally driven print head (19) for printing on sheets fed by the sheet feeding means (21), and a disc-printing station (40) located at a position at which the print head (19) can print, **characterised in that** the disc-printing station (40) comprises a turntable (5) for rotating a disc to be printed on by the print head (19), a motor (25) for driving both sheet feeding means (21) and the turntable (5) and, a transmission (50) for transmitting drive to the turntable.

2. An apparatus according to claim 1 wherein the transmission includes a clutch (60) for selectively transmitting drive to the turntable (5).

3. An apparatus according to any preceding claim, wherein the disc-printing station (40) is located within the range of the reciprocal motion of the print head (19) used for printing on sheets fed by the sheet feeding means (21).

4. An apparatus according to any preceding claim, wherein the print head (19) is an inkjet print head.

5. An apparatus according to claim 1, wherein the print head (19) is disposed in a carrier (14), wherein the carrier (14) is reciprocatingly set in a body of the printing apparatus (10), the apparatus also comprising a driving motor (25) to provide a rotational driving force to at least one roller (21) set in the body of the image forming apparatus (10) to transfer a print paper, and wherein the turntable (5) rotates the disc by a driving force of the driving motor (25) during a printing operation.

6. The apparatus according to claim 5, wherein the at least one roller (21) includes a feeding roller (21) located below the carrier (14) for feeding the print paper.

7. The apparatus according to claim 5, wherein the turntable (5) has a vertical axis and positioned under the carrier (14) at a lateral end area of the at least one roller (21), in which the disc is seated on the turntable (5), and a power transfer unit (50) to transmit the rotational force of the at least one roller (21) to the turntable (5).

8. The apparatus according to claim 7, wherein the power transfer unit (50) comprises a driven gear (53) connected along the vertical axis of the turntable (5) and a driving gear (51) connected to a rotational shaft (22) of the feeding roller (21) to rotate the driven gear (53) while being cooperated with the feeding roller (21).

9. The apparatus according to claim 7, wherein the power transfer unit (50) comprises a driven gear (53) connected downwardly along the vertical axis of the turntable (5), a driving gear (51) connected to a rotational shaft (22) of the at least one roller (21), and a clutch unit (60) located between the driving gear (51) and the driven gear (53) to intermittently transmit the rotational force of the driving gear (51) to the driven gear (53).

10. The apparatus according to claim 9, wherein the driven gear (53) is a worm wheel and the driving gear (51) is provided with a plurality of first projections (52) projected along the axial direction of the feeding roller (21), wherein the clutch unit (60) comprises an intermediate gear (63) comprising of a worm part (64) located parallel to the rotational shaft (22) of the at least one roller (21) and engaged with the worm wheel (83), and a gear part (65) extended in the radial direction from an end of the worm part (64), a clutch gear (61) provided with a plurality of second projections (62) to be engaged with the first projections (52) of the driving gear (51), in which the clutch gear (61) is movable along the axis of the feeding roller (21) when engaged with the gear part (65) of the intermediate gear (63), and
a solenoid device (68) to move the clutch gear (61) between an engagement position, where the clutch gear (61) is engaged with the driving gear (51), and a disengagement position, where the clutch gear (61) is released from the engagement with the driving gear (51).

11. The apparatus according to claim 5, wherein an encoding unit (70) detects the position of the carrier (14) and determines the position of an ink cartridge (13) in the print head (19) to perform the function of printing on the disc by the encoding unit (70) that detects the position of the carrier (14).

12. The apparatus according to claim 11, wherein the encoding unit (70) comprises an encoder strip bar (72) that is stored with information relating to the position and moving distance of the carrier (14) and is provided along the moving direction of the carrier (14), and an encoder reader (71) attached to the rear surface of the carrier (14), in which the encoder reader (71) reads a value stored in the encoder strip bar (72) to detect the position of the carrier (14).

## Patentansprüche

1. Druckervorrichtung (10), die ein Blattzuführungsmittel (21), einen wechselseitig angetriebenen Druckkopf (19) zum Drucken auf Blätter, die vom Blattzuführungsmittel (21) zugeführt wurden und eine Disc-Druckstation (40) umfasst, die sich in einer Position befindet, in welcher der Druckkopf (19) drucken kann, **dadurch gekennzeichnet, dass** die Disc-Druckstation (40) eine Drehplatte (5) zum Rotieren einer vom Druckkopf (19) zu bedruckenden Disc, einen Motor (25) zum Antreiben sowohl des Blattzuführungsmittels (21) als auch der Drehplatte (5) und ein Getriebe (50) zum Übertragen des Antriebs auf die Drehplatte umfasst.

2. Vorrichtung nach Anspruch 1, wobei das Getriebe eine Kupplung (60) zur selektiven Übertragung des Antriebs auf die Drehplatte (5) einschließt.

3. Vorrichtung nach einem beliebigen vorhergehenden Anspruch, wobei sich die Disc-Druckstation (40) innerhalb des Bereichs der wechselseitigen Bewegung des Druckkopfs (19) befindet, der zum Drucken auf Blätter verwendet wird, die vom Blattzuführungsmittel (21) zugeführt werden.

4. Vorrichtung nach einem beliebigen vorhergehenden Anspruch, wobei der Druckkopf (19) ein Tintendruckkopf ist.

5. Vorrichtung nach Anspruch 1, wobei der Druckkopf (19) in einem Träger (14) angeordnet ist, wobei der Träger (14) hin- und hergehend in einen Körper der Druckervorrichtung (10) eingesetzt ist, die Vorrichtung außerdem einen Antriebsmotor (25) umfasst, um eine drehende Antriebskraft zu mindestens einer Walze (21) bereitzustellen, die in den Körper der Bilderzeugungsvorrichtung (10) eingesetzt ist, um ein Druckpapier zu transferieren und, wobei die Drehplatte (5) die Disc durch eine Antriebskraft des Antriebsmotors (25) während eines Druckvorgangs dreht.

6. Vorrichtung nach Anspruch 5, wobei die zumindest eine Walze (21) eine Zuführungswalze (21) einschließt, die sich unterhalb des Trägers (14) befindet, um das Druckpapier zuzuführen.

7. Vorrichtung nach Anspruch 5, wobei die Drehplatte (5) eine vertikale Achse hat und unter dem Träger (14) in einem lateral Endbereich, der zumindest einen Walze (21) positioniert ist, in dem die Disc auf der Drehplatte (5) sitzt und eine Kraftübertragungseinheit (50) aufweist, um die Drehkraft der zumindest einen Walze (21) auf die Drehplatte (5) zu übertragen.

8. Vorrichtung nach Anspruch 7, wobei die Kraftübertragungseinheit (50) ein angetriebenes Zahnrad (53), das entlang der vertikalen Achse der Drehplatte (5) verbunden ist, und ein treibendes Zahnrad (51) umfasst, das mit einer Drehwelle (22) der Zuführungswalze (21) verbunden ist, um das angetriebene Zahnrad (53), während Kooperation mit der Zuführungswalze (21), zu rotieren.

9. Vorrichtung nach Anspruch 7, wobei die Kraftübertragungseinheit (50) ein angetriebenes Zahnrad (53), das abwärts entlang der vertikalen Achse der Drehplatte (5) verbunden ist, ein treibendes Zahnrad (51), das mit einer Drehwelle (22) der zumindest einen Walze (21) verbunden ist, und eine Kupplungseinheit (60) umfasst, die sich zwischen dem treibenden Zahnrad (51) und dem angetriebenen Zahnrad (53) befindet, um die Drehkraft des treibenden Zahnrads (51) intermittierend auf das angetriebene Zahnrad (53) zu übertragen.

10. Vorrichtung nach Anspruch 9, wobei das angetriebene Zahnrad (53) ein Schneckenrad ist und das treibende Zahnrad (51) mit einer Vielheit erster Vorsprünge (52) versehen ist, die entlang der axialen Richtung der Zuführungswalze (21) hervorstehen, wobei die Kupplungseinheit (60) ein Zwischenrad (63) umfasst, das einen Schneckenteil (64) umfasst, der parallel zur Drehwelle (22) der zumindest einen Walze (21) gelegen ist und mit dem Schneckenrad (83) in Eingriff ist, und wobei sich ein Zahnradteil (65) in der radialen Richtung aus einem Ende des Schneckenteils (64) erstreckt, ein Kupplungszahnrad (61) mit einer Vielheit zweiter Vorsprünge (62) versehen ist, um mit den ersten Vorsprüngen (52) des treibenden Zahnrads (51) in Eingriff gebracht zu werden, wobei das Kupplungszahnrad (61) entlang der Achse der Zuführungswalze (21) bewegbar ist, wenn es mit dem Zahnradteil (65) des Zwischenrads (63) in Eingriff ist und ein Solenoidgerät (68) umfasst, um das Kupplungszahnrad (61) zwischen einer gekuppelten Position, wo das Kupplungszahnrad (61) mit dem treibenden Zahnrad (51) in Eingriff ist und einer entkuppelten Position, wo das Kupplungszahnrad (61) aus dem Eingriff mit dem treibenden Zahnrad (51) gelöst ist, zu bewegen.

11. Vorrichtung nach Anspruch 5, wobei eine Codiereinheit (70) die Position des Trägers (14) detektiert und die Position einer Tintenpatrone (13) im Druckkopf (19) ermittelt, um durch die Codiereinheit (70), welche die Position des Trägers (14) detektiert, die Druckfunktion auf die Disc auszuführen.

12. Vorrichtung nach Anspruch 11, wobei die Codiereinheit (70) einen Codier-Balkencode (72), der mit Information gespeichert ist, die sich auf die Position und Bewegungsstrecke des Trägers (14) bezieht und entlang der Bewegungsrichtung des Trägers (14) vorgesehen ist und einen Codierer-Leser (71) umfasst, der an der rückwärtigen Oberfläche des Trägers (14) angebracht ist, wobei der Codierer-Leser (71) einen Wert liest, der im Codierer-Balkencode (72) gespeichert ist, um die Position des Trägers (14) zu detektieren.

## Revendications

1. Appareil d'impression (10) comprenant un moyen d'alimentation en feuilles (21), une tête d'impression entraînée en un mouvement de va-et-vient (19) pour imprimer sur des feuilles alimentées par le moyen d'alimentation en feuilles (21), et un poste d'impression de disque (40) situé dans une position dans laquelle la tête d'impression (19) peut imprimer, **caractérisé en ce que** le poste d'impression de disque (40) comprend un plateau tournant (5) pour faire tourner un disque à imprimer par la tête d'impression (19), un moteur (25) pour entraîner à la fois le moyen d'alimentation en feuilles (21) et le plateau tournant (5), et une transmission (50) pour transmettre un entraînement au plateau tournant.

2. Appareil selon la revendication 1, dans lequel la transmission comprend un embrayage (60) pour transmettre sélectivement un entraînement au plateau tournant (5).

3. Appareil selon l'une quelconque des revendications précédentes, dans lequel le poste d'impression de disque (40) est situé à l'intérieur de la plage du mouvement de va-et-vient de la tête d'impression (19) utilisée pour imprimer sur des feuilles alimentées par le moyen d'alimentation en feuilles (21).

4. Appareil selon l'une quelconque des revendications précédentes, dans lequel la tête d'impression (19) est une tête d'impression à jet d'encre.

5. Appareil selon la revendication 1, dans lequel la tête d'impression (19) est disposée dans un support (14), dans lequel ce support (14) est installé avec un mouvement de va-et-vient dans un corps de l'appareil d'impression (10), cet appareil comprenant aussi un moteur d'entraînement (25) pour fournir une force d'entraînement rotative à au moins un rouleau (21) installé dans le corps de l'appareil de formation d'image (10) pour transférer un papier d'impression, et dans lequel le plateau tournant (5) fait tourner le disque par une force d'entraînement du moteur d'entraînement (25) pendant une opération d'impression.

6. Appareil selon la revendication 5, dans lequel au moins un rouleau (21) comprend un rouleau d'alimentation (21) situé en dessous du support (14) pour alimenter le papier d'impression.

7. Appareil selon la revendication 5, dans lequel le plateau tournant (5) a un axe vertical et est positionné sous le support (14) à l'endroit d'une zone extrême latérale de l'au moins un rouleau (21), dans lequel le disque est assis sur le plateau tournant (5), et a un dispositif de transfert d'énergie (50) pour transmettre la force de rotation de l'au moins un rouleau (21) au plateau tournant (5).

8. Appareil selon la revendication 7, dans lequel le dispositif de transfert d'énergie (50) comprend un engrenage mené (53) rattaché le long de l'axe vertical du plateau tournant (5) et un engrenage menant (51) rattaché à un arbre de rotation (22) du rouleau d'alimentation (21) pour faire tourner l'engrenage mené (53) tout en étant coopéré avec le rouleau d'alimentation (21).

9. Appareil selon la revendication 7, dans lequel le dispositif de transfert d'énergie (50) comprend un engrenage mené (53) rattaché vers le bas le long de l'axe vertical du plateau tournant (5) et un engrenage menant (51) rattaché à un arbre de rotation (22) de l'au moins un rouleau (21), et un dispositif d'embrayage (60) situé entre l'engrenage menant (51) et l'engrenage mené (53) pour transmettre de manière intermittente la force de rotation de l'engrenage menant (51) à l'engrenage mené (53).

10. Appareil selon la revendication 9, dans lequel l'engrenage mené (53) est un engrenage à vis sans fin et l'engrenage menant (51) est pourvue d'une pluralité de premières saillies (52) faisant saillie le long de la direction axiale du rouleau d'alimentation (21), dans lequel le dispositif d'embrayage (60) comprend un engrenage intermédiaire (63) comprenant une partie à vis sans fin (64) située parallèlement à l'arbre de rotation (22) de l'au moins un rouleau (21) et engagée avec la roue à vis sans fin (83), et une partie engrenage (65) s'étendant dans la direction radiale depuis une extrémité de la partie à vis sans fin (64), un engrenage d'embrayage (61) pourvu d'une pluralité de deuxièmes saillies (62) destinées à être engagées avec les premières saillies (52) de l'engrenage menant (51), dans lequel l'engrenage d'embrayage (61) peut être déplacé le long de l'axe du rouleau d'alimentation (21) lorsqu'il est engagé avec la partie engrenage (65) de l'engrenage intermédiaire (63), et un dispositif solénoïde (68) pour déplacer l'engrenage d'embrayage (61) entre une position d'engagement, dans laquelle l'engrenage d'embrayage (61) est engagé avec l'engrenage menant (51), et une position de désengagement, dans laquelle l'engrenage d'embrayage (61) est dégagé de l'engagement avec l'engrenage menant (51).

11. Appareil selon la revendication 5, dans lequel un dispositif d'encodage (70) détecte la position du support (14) et détermine la position d'une cartouche d'encre (13) dans la tête d'impression (19) pour exécuter la fonction d'impression sur le disque par le dispositif d'encodage (70) qui détecte la position du support (14).

12. Appareil selon la revendication 11, dans lequel le dispositif d'encodage (70) comprend une bande d'encodeur (72) dans laquelle sont stockées des informations ayant trait à la position et à la distance de déplacement du support (14) et qui est prévue le long de la direction de déplacement du support (14), et un lecteur d'encodeur (71) attaché à la surface arrière du support (14), dans lequel le lecteur d'encodeur (71) lit une valeur stockée dans la bande d'encodeur (72) pour détecter la position du support (14).
